# EUROPEAN PATENT SPECIFICATION

(11) **EP 0 408 291 B1**
(45) Date of publication and mention of the grant of the patent: **03.02.1993**
(21) Application number: 90307496.1
(22) Date of filing: 09.07.1990
(51) Int. Cl.: B29C 47/02, B60R 13/06, B29C 67/14

(54) **Method of manufacturing an elastomeric strip**
Verfahren zur Herstellung eines elastomeren Streifens
Procédé de fabrication d'une bande en élastomère

(30) Priority: 14.07.1989 GB 8916181; 28.11.1989 GB 8926901
(43) Date of publication of application: 16.01.1991
(73) Proprietor: SCHLEGEL (UK) HOLDINGS LIMITED, Seacroft Leeds, LS14 1LY (GB)
(72) Inventor: Cook, John Edward, Aslockton, Nottingham NG12 9AE (GB)
(74) Representative: Carpmael, John William Maurice

(56) References cited:
- EP-A- 0 202 041
- EP-A- 0 242 175
- FR-A- 2 406 153
- JP-A-60 224 530
- US-A- 2 800 423
- US-A- 4 343 845

## Description

This invention relates to a method of manufacturing an elastomeric strip and to a strip formed by the method. The invention also relates to a method of forming a carrier which can be used in the manufacture of an elastomeric strip, or for other purposes, and to a carrier itself.

The invention is particularly applicable to the formation of generally U-shaped edge trims having a stiffening carrier embedded therein, with or without a seal extending therefrom, which are used as door seals and edge trims in motor cars. However, it could be used for the manufacture of other types of elastomeric strips and is particularly useful for the manufacture of elastomeric strips which need to be able to conform to sharp bends at selected locations.

More particularly, the invention relates to a method of manufacturing an elastomeric strip so that the strip is provided at selected regions with different properties, so that the strip will behave differently in selected regions. The invention is particularly applicable to the manufacture of elastomeric door seals, so that the strips can be applied to a flange on a vehicle door or door opening, and can conform to curved sections of the flange, such as are found at the waistline and top and bottom corners of the door openings.

In US-A-4343845, a method of manufacturing an elastomeric strip is disclosed wherein a zig-zag wire carrier of known construction is provided, wherein some of the warps which prevent stretching of the carrier are formed of a degradable material and others of a non-degradable material, and after the carrier has been passed through an extruder so that the carrier is coated with an elastomeric material to form an elastomeric strip, the elastomeric strip is subsequently treated by heating to degrade the degradable warps. The transverse location in the carrier of degradable warps is chosen so that, when the warps are degraded, that location of the carrier and hence the appropriate region of the elastomeric strip will be more flexible than the region incorporating the non-degradable warps. This method suffers from the disadvantage that degrading can only be achieved in a transverse region of the strip where the degradable warps are located throughout the length of the strip.

In U.S. Patent No.5009947, a modification of the above method is proposed, wherein the degradable warps previously located in the carrier within the strip are selectively degraded at chosen longitudinal positions within the strip. This method suffers from the disadvantage that it is only possible to degrade all the degradable warps in the selected longitudinal region of the strip.

The present invention seeks to provide a more versatile method for selectively degrading an elastomeric strip at any chosen transverse and/or longitudinal location in the strip.

According to the present invention, we provide a method of manufacturing an elastomeric strip, comprising the steps of forming a carrier from a plurality of longitudinally spaced, transversely extending members and means extending longitudinally of the carrier to control the longitudinal spacing of the transversely extending members, passing the carrier through an extruder, extruding an elastomeric material over at least part of the carrier, and in a separate step degrading at least part of said means at at least one selected position in the carrier so that in that position said means no longer controls said longitudinal spacing of the transversely extending members.

The words "no longer" used above should be interpreted to cover an arrangement which is such that the degree of control is changed from that which occurred prior to degradation. For example, said means after degradation, may be more elastic than it was prior to degradation.

Preferably, the degrading step takes place after the elastomeric material has been extruded over the carrier, and/or after a curing step.

Preferably, the carrier is a wire carrier formed from a length of wire formed into a zig-zag configuration having a plurality of generally parallel, spaced transverse members joined at opposite ends which are edge regions of the carrier by generally U-shaped wire portions and said means extends lengthwise of the carrier between the edge regions.

Alternatively, the carrier may be of slotted or stamped metal (or plastics) construction, which may be expanded. The means may comprise one or more strands of yarn, e.g. polyester or polypropylene yarns, thread, wire, a tape, a fibre, or the like, or a combination thereof (including coated wire) of any required width, which is knitted, knotted, stitched, woven, welded or otherwise engaged with the longitudinally spaced transverse members, or a combination thereof (including coated wire). These strands are normally required to control the stretching of the carrier and end product during an extrusion operation when an elastomer is extruded over the carrier and the extruded product is then hauled out of the extruder. However, they can be detrimental because they subsequently reduce the flexibility of the extrusion, which is why the present invention has been made.

The degrading occurs at selected longitudinal and/or transverse locations within the strip, and may be varied from location to location, and hence may result in one or more strands being degraded at any longitudinal or transverse location in the strip. However, the degradation could be achieved using mechanical means, which might, for example, cause a breakdown in one or more lines of weakness within the carrier.

Preferably, degrading is achieved using ultrasonics. This may be achieved by applying a horn to the selected position of the strip, and causing it to vibrate, e.g. at a frequency of 20,000 cycles/second (20kHz). The base of the horn may have an area equal to the area of the strip to be degraded, and a length equal to half the wavelength of the vibrations. Preferably, the horn is applied to the surface of the area to be degraded with a pressure of about 275.79 kPa (40lbs/sq.in.), there being an anvil behind the area to be degraded to hold the strip steady.

It is preferred that the elastomeric material is a 70 shore hardness EPDM, and that the carrier is formed of zigzag wire which provides said transversely extending, longitudinally spaced members, and the means to control the longitudinal spacing of said members is a plurality of strands of polyester knitted into the zig-zag wire in known manner. These yarns are normally known as non-degradable yarns because they will withstand normal elastomer extrusion temperatures, but they will degrade if the temperature is high enough. Polypropylene yarns degrade at a lower temperature. If it is required to incorporate totally non-degradable means extending lengthwise of the carrier, these could be formed of thin flexible wire, glass fibre or carbon fibre, or a wire welded to the transverse members, or selected ones thereof.

Preferably, the horn is applied to the area to be degraded for a period of about .4 to 2.5 seconds, preferably about .6 seconds, but this will depend on the power used and the properties of the strip.

Surprisingly, it has been found that the elastomeric material does not degrade or burn, and it is believed that this is because of its rubbery properties, i.e. it does not vibrate because it is impossible to hold it firm enough with the commercially available ultrasonic system used. Furthermore, it is believed that the transverse members of the carrier, i.e. lengths of wire or metal, do not heat up and distort or be otherwise damaged because, as they are connected to further lengths of wire or metal, the metal acts as an antenna and transmits vibrations away. However, the said means, e.g. knitted polyester warps, because they are the most rigid component of the strip, are vibrated and heat up and hence degrade.

The selected areas of the carrier may be degraded using ultrasonics or any other method disclosed herein.

Also according to the present invention, we provide an extruded strip manufactured according to the method(s) as described herein, and according to claim 10.

It is preferred that the means extending lengthwise of the carrier to control the spacing of the transvese members be formed of a degradable thread, yarn, tape or the like which can be degraded by ultrasonics, heat, chemicals or other means as required.

It should be appreciated that said means may be of various different constructions, such as those described in any one or a combination of our co-pending U.K. Patent Application Nos: 9001998.5 (now EP Application 0398498), 8909077.3, 8909078.1 (now EP Application 0393943) or in U.S. Patent No.4343845, or U.S. Patent No.5009947, the contents of any one of which specifications is incorporated herein, and may be combined with the other disclosures herein.

In some cases, it is required to have an elastomeric extrusion with a bulbous sealing portion which is extruded integrally or at the same time (or combined in a subsequent operation) with the elastomeric material in which the carrier is embedded. With such constructions of elastomeric strip, it is very difficult, after the strip has been manufactured, to degrade means controlling extension of the carrier which is located beneath the bulbous sealing portion. For example, an ultrasonic horn cannot be applied to the surface of the extrusion at a location which is sufficiently close for the means to be degraded. In such a case, the means should be formed of a material which will degrade at a different temperature from other means extending lengthwise of the carrier (e.g. of polypropylene), and should be degraded, e.g. during the extrusion or curing stage, using the teachings of EP-GB-0045176 or U.S. Patent No.5009947. If it is desired that the means beneath the sealing portion only be degraded at selected longitudinally spaced locations, then the teachings of U.S. Patent No.5009947 and/or European Patent Application No.0398498 should be used.

Several embodiments of the present invention are now described by way of example with reference to the accompanying schematic drawings, in which:-
FIGURE 1a is an enlarged, transverse section through a combined elastomeric edge trim and seal incorporating a wire carrier partly in a splayed condition ready for application to a flange with the aid of a clamping tool;
FIGURE 1b is a plan view of the carrier in the trim/seal of Figure 1a, but shown in a flat condition, prior to the extrusion of the elastomer around the carrier;
FIGURE 1c is a view similar to Figure 1b but showing how the carrier has been degraded in accordance with the invention;
FIGURE 2a is a view similar to Figure 1a but showing a wire carrier only of a second embodiment of the invention;
FIGURE 2b is a view similar to Figure 1c but showing the carrier of Figure 2a degraded differently; and
FIGURES 3a and 3b are views similar to Figures 1a and 1c but of a third embodiment of the invention.

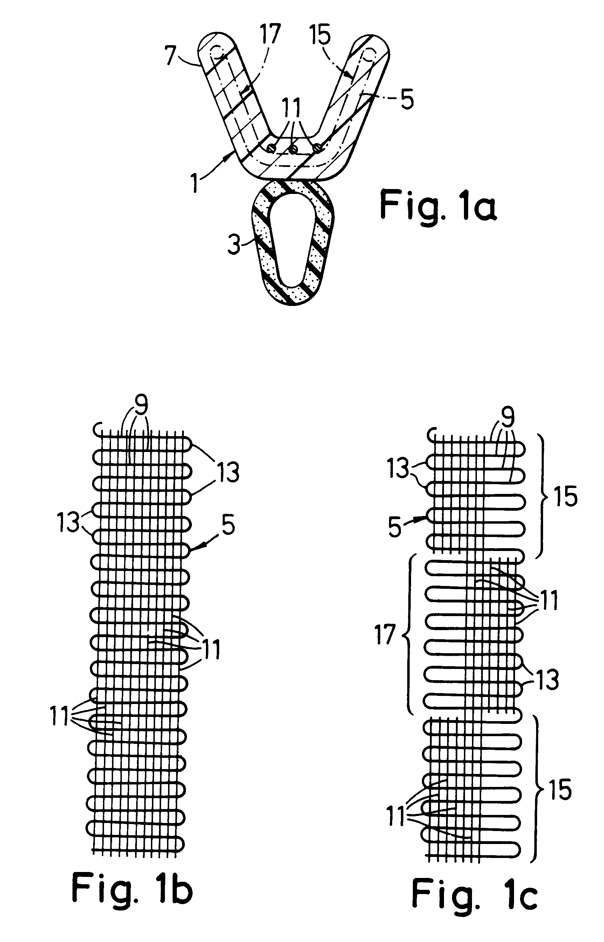

Referring to the drawings, Figure 1a shows a partly splayed-open U-shaped edge trim 1 having a bulbous seal 3 extending from its base. The edge trim 1 includes a wire carrier 5 embedded within an extruded elastomeric material 7. The seal 3 is shown as being a sponge material, and may be of similar material to the material 7 and extruded therewith in a single extrusion die or, alternatively, it may be combined with the edge trim in a separate operation.

The wire carrier 5 is initially of known construction and when it is manufactured it is formed into a flat zig-zag configuration as shown in Figure 1b with a plurality of axially spaced transverse members 9 which are held in their axially spaced configuration by a plurality of warps 11 transversely spaced across the carrier and extending lengthwise of the carrier in known manner. The warps may be formed of a synthetic resinous material such as a polyester yarn and may be attached to each transverse member 9 with a stitch or knot or merely woven into or connected with the transverse members 9. Opposite ends of the transverse members 9 are connected to their adjacent ends by U-shaped portions 13 in known manner.

There are several ways in which the carrier shown in Figure 1b can be formed into an edge trim such as that shown in Figure 1a, one traditional way being to bend the carrier into the shape shown in Figure 1a and then pass it into an extruder and extrude the elastomeric material 7 around the carrier. The bulbous seal 3 can be extruded at the same time or be subsequently combined with the extrusion. Normally, after the extrusion stage, the extrusion is cooled and/or cured depending on whether it is made of a thermosetting or thermoplastics material. If it is desired uniformly to degrade some of the warps 11 across the width of the carrier along its length, those warps can be formed of a material such as polypropylene which will degrade during the extrusion step, in accordance with the teachings of EP-B-0045175. However, in accordance with this invention, selected ones of the warps 11 are degraded only at selected locations in the carrier so that in those degraded regions the carrier will be far more flexible than in the non-degraded regions. As shown in Figure 1c, the degraded regions are the regions 15 and 17, there being two regions 15 to the right of the central line of the carrier and one region 17 to the left of the centre line, the two regions 15 being longitudinally spaced to either side of the region 17. This degrading step is achieved by submitting the formed extrusion to a degrading operation subsequent to its formation, for example by applying a horn forming part of an ultrasonic device to the area to be degraded and causing the area to be vibrated at a frequency of a level of 20,000 cycles per second. Degrading may, however, be achieved in other known ways.

It may be easier to extrude the elastomeric material 7 around the carrier 5 while the latter is flat, and carry out any curing step, and then degrade the carrier while the carrier and elastomeric material are still flat. Then, the extrusion can be bent into the edge trim shape shown in Figure 1a.

It can then be applied to a flange using a crimping tool.

Alternatively, the edge trim can be formed into a normal U-shape ready for fitting to a flange by hand or in any other known way.

If it is desired to degrade the warp or warps 11 running centrally of the edge trim (and shown non-degraded in Figure 1c) it is not normally possible to achieve this subsequent to the formation of the edge trim/seal because the warp or warps is located beneath the bulbous seal 3 and hence is not accessible for the degrading step. Degradation is best achieved during the extrusion or curing step by forming the warp or warps of a material of a melting temperature such that it will be degraded as a result of the heat of the extrudate or curing bed. Normally, of course, this temperature would be a temperature lower than that at which the other warps do degrade so that the other warps can maintain the spacing of the transverse members 9 of the carrier during the extrusion operation.

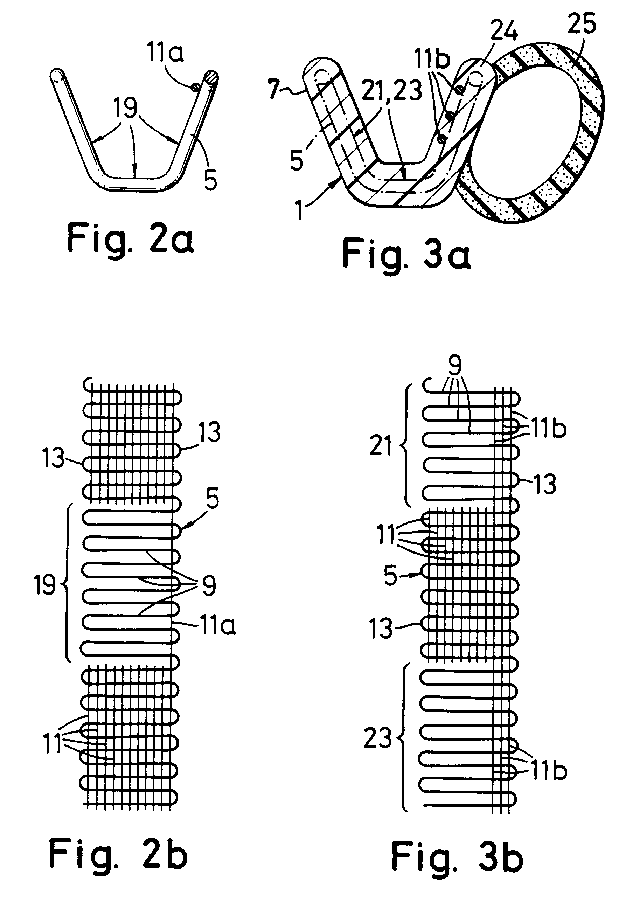

In the embodiment shown in Figures 2a and 2b, parts similar to the embodiment of Figures 1a - 1c have the same reference numerals. In this embodiment, however, the edge trim (the elastomeric material 7 has been omitted from Figure 2a) has a degraded area 19 extending almost completely across the width of the carrier, there being a narrow non-degraded strip represented by the warp 11a just down one edge of the carrier and hence one edge of the edge trim.

In the construction shown in Figures 3a and 3b, the same reference numerals are again used to identify the same parts as the parts shown in Figures 1a - 1c. In this embodiment of the invention, two adjacent but spaced areas 21 and 23 extending down the whole of one limb and across the base of the U-shaped carrier have been degraded, these degraded areas being easily degradable after formation of the combined edge trim and seal. Because of the presence of the bulbous seal 25 on one limb 24 of the edge trim, it is difficult to degrade the region of the carrier within the limb 24 after formation of the edge trim/seal, and as with the embodiment of Figure 1a, this area of the edge trim is best degraded during one of the forming steps of the edge trim, for example by forming the warps 11b of a material such as polypropylene which will melt during the extrusion or curing step.

It will thus be appreciated that the constructions of combined edge trim/seal shown in the drawings will be considerably more flexible in their degraded regions 15,17,19,21 or 23 than in their non-degraded regions, thus allowing the degraded regions to be located, for example, on those parts of flanges having tight radius bends.It will be appreciated that the three constructions illustrated with reference to the drawings are merely illustrative of many different constructions which can be achieved in accordance with the present invention. By performing the degrading step on the manufactured extrusion either while it is in a flat state or formed into a U-shape or any other shape, any selected area of the carrier within the extrusion can be degraded, thus imparting flexibility at that area to the extrusion. This means that by suitable indexing or other marking of the extrusion, selected areas of the extrusion can be degraded using ultrasonics or other known methods, which areas coincide, for example, with sharp bends or kinks in door frames or door frame flanges or other spots in which the extrusion is to be mounted. Obviously, various combinations of the constructions shown in Figures 1c, 2b and 3b are possible, and it is also possible using the invention to degrade a selected portion of an extrusion completely across the width of the extrusion if desired.

It should be understood that the present invention allows a strip to be provided which is initially non-stretchable, i.e. it does not stretch during manufacture and thus shrink in use, but which can then be made stretchable in required localised areas, so that the strip can conform to irregular contours/shapes.

It will of course be understood that the present invention has been described above purely by way of example, and modifications of detail can be made within the scope of the invention. For example, degrading could be performed by the application of heat, mechanical means, chemicals, radiation or any other means. Accordingly, the means extending longitudinally of the carrier may be formed of a material other than polyester or polypropylene.

## Claims

1. A method of manufacturing an elastomeric strip comprising the steps of forming a carrier (5) from a plurality of longitudinally spaced, transversely extending members (9) and means (11) extending longitudinally of the carrier to control the longitudinal spacing of the transversely extending members (9), passing the carrier through an extruder (not shown), extruding an elastomeric material (7) over at least part of the carrier (5), and in a separate step, degrading at least part (15,17,19 or 21) of said means (11) at at least one selected position in the carrier (5), which position can be at any desired longitudinal or any desired transverse location in the carrier so that in that position said means (11) no longer controls said longitudinal spacing of the transversely extending members (9).

2. A method according to claim 1 wherein the degrading step takes place after the elastomeric material (7) has been extruded over the carrier (5).

3. A method according to claim 1 wherein the degrading step takes place after the elastomeric material (7) has been cured.

4. A method according to claim 1, 2 or 3 wherein the carrier comprises a length of wire formed into a zig-zag configuration and having a plurality of generally parallel, spaced transverse members (9) joined at opposite ends which are edge regions of the carrier by generally U-shaped wire portions (13), and said means (11) extend lengthwise of the carrier between the edge regions, and the means (11) comprise a plurality of strands of yarn, thread, wire, tape, fibre or the like, which is knitted, knotted, stitched, woven, welded or otherwise engaged with the longitudinally spaced transverse members (9).

5. A method according to claim 1, 2 or 3 wherein the carrier is formed of slotted or stamped metal or plastics (not shown) and said means comprises at least one strand of yarn, thread, wire, tape, fibre or the like of any required width extending along the carrier.

6. A method according to any one of claims 1-5 wherein degrading is achieved using ultrasonics.

7. A method according to claim 6 wherein a horn is applied to one or more selected portions of the strip, and caused to vibrate at a frequency of 20,000 cycles/second (20kHz).

8. A method according to claim 7 wherein the base of the horn has an area equal to the area of the strip to be degraded, and a thickness equal to half the wavelength of the vibrations, and wherein the horn is applied to the surface of the area to be degraded with a pressure of about 275.79 kPa (40lbs/sq.in.), there being an anvil behind the area to be degraded to hold the strip steady.

9. A method according to any one of the preceding claims wherein the elastomeric material is a 70 shore hardness EPDM and the means to control the longitudinal spacing of said members is made from polyester.

10. An extruded strip comprising a carrier (5) having a plurality of spaced transverse members (9) with means (11) extending lengthwise of the carrier to control the spacing of the transverse members (9), a polymeric material (7) extruded over the carrier (5), and wherein said means (11) is non-uniform throughout the carrier (5), whereby the stretchability and hence flexibility of the carrier (5) is different at chosen areas of the carrier (5), wherein said means is formed of a degradable thread, yarn, tape or the like, which has been made non-uniform after extrusion of the polymeric material over the carrier by degrading, using ultrasonics, heat, chemicals, or an other degrading method.

## Patentansprüche

1. Verfahren zum Herstellen eines elastomeren Streifens oder einer elastomeren Leiste, das die Schritte aufweist, einen Träger (5) aus einer Vielzahl von in Längsrichtung beabstandeten, sich quer erstreckenden Gliedern (9) und Mitteln (11) zu bilden, die sich in Längsrichtung des Trägers erstrecken, um den bestand der sich quer erstrekkenden Glieder (9) in Längsrichtung zu kontrollieren, den Träger durch einen Extruder (nicht gezeigt) hindurch zu führen, ein elastomeres Material (7) über wenigstens einen Teil des Trägers (5) zu extrudieren und in einem separaten Schritt wenigstens einen Teil (15, 17, 19 oder 21) der Mittel (11) an wenigstens einer ausgewählten Stelle im Träger (5) zu schwächen, welche Stelle an irgendeiner gewünschten Stelle in Längsrichtung oder in Querrichtung im Träger angeordnet sein kann, so daß an dieser Stelle die Mittel (11) nicht mehr den bestand der sich in Querrichtung erstreckenden Glieder (9) in Längsrichtung kontrollieren.

2. Verfahren nach Anspruch 1, bei dem der Schwächungsschritt stattfindet, nachdem das elastomere Material (7) über den Träger (5) extrudiert worden ist.

3. Verfahren nach Anspruch 1, bei dem der Schwächungsschritt stattfindet, nachdem das elastomere Material (7) ausgehärtet ist.

4. Verfahren nach Anspruch 1, 2 oder 3, bei dem der Träger einen Drahtabschnitt aufweist, der in eine zickzackförmige Konfiguration geformt ist und eine Vielzahl von allgemein parallelen beabstandeten Quergliedern (9) aufweist, die an gegenüberliegenden Enden, die Randbereiche des Trägers sind, durch allgemein U-förmige Drahtabschnitte (13) verbunden sind, und wobei sich die Mittel (11) in Längsrichtung des Trägers zwischen den Randbereichen erstrekken, und wobei die Mittel (11) eine Vielzahl von Garn-, Faden-, Draht-, Band-, Fasersträngen oder ähnliches aufweisen, die gestrickt, gewirkt, geknotet, geheftet, gewoben, geschweißt oder auf andere Weise mit den in Längsrichtung beabstandeten Quergliedern (9) in Eingriff gebracht sind.

5. Verfahren nach Anspruch 1, 2 oder 3, bei dem der Träger aus geschlitztem oder gestanztem Metall oder Kunststoff (nicht gezeigt) gebildet ist und die Mittel wenigstens einen Garn-, Faden-, Draht-, Band-, Faserstrang oder dergleichen irgendeiner erforderlichen Breite aufweisen, der sich entlang des Trägers erstreckt.

6. Verfahren nach einem der Ansprüche 1 bis 5, bei dem das Schwächen unter Verwendung von Ultraschall erreicht wird.

7. Verfahren nach Anspruch 6, bei dem ein Horn oder Schalltrichter an eine oder mehrere ausgewählte Stellen des Streifens oder der Leiste angelegt wird und in Schwingungen bei einer Frequenz von 20.000 Schwingungen pro Sekunde (20 kHz) versetzt wird.

8. Verfahren nach Anspruch 7, bei dem die Grundfläche des Horns eine Größe, die gleich der zu schwächenden Fläche des Streifens oder der Leiste ist, und eine Dicke hat, die gleich der halben Wellenlänge der Schwingungen ist, und wobei das Horn oder der Schalltrichter an die Oberfläche des zu schwächenden Gebiets mit einem Druck von ungefähr 275,79 kPa (40 lbs/sq.in.) angelegt wird, wobei ein Amboß hinter dem zu schwächenden Bereich vorgesehen ist, um den Streifen oder die Leiste zuverlässig zu halten.

9. Verfahren nach einem der vorangehenden Ansprüche, bei dem das elastomere Material ein EPDM mit Shorehärte 70 ist und die Mittel zum Kontrollieren des Längsabstands der Glieder aus Polyester hergestellt sind.

10. Extrudierter Streifen oder extrudierte Leiste, die einen Träger (5) mit einer Vielzahl von beabstandeten Quergliedern (9) mit Mitteln (11), die sich in Längsrichtung des Trägers erstrecken, um den Abstand der Querglieder (9) zu kontrollieren, die ein polymeres Material (7), das über den Träger (5) extrudiert ist, aufweist, und wobei die Mittel (11) über den Träger (5) nicht gleichförmig sind, wobei die Dehnbarkeit und daher die Flexibilität des Trägers (5) in ausgewählten Bereichen des Trägers (5) unterschiedlich ist, wobei die Mittel aus einem schwächbaren Faden, Garn, Band oder ähnlichem gebildet sind, der bzw. das nach dem Extrudieren des polymeren Materials über den Träger durch Schwächen unter Verwendung von Ultraschall, Wärme, Chemikalien oder eines anderen Schwächungsverfahrens ungleichförmig gemacht worden ist.

## Revendications

1. Procédé pour fabriquer une bande élastomère comprenant les étapes consistant à former un support (5) à partir d'une pluralité d'éléments transversaux (9) espacés longitudinalement et des moyens (11) qui s'étendent dans la direction longitudinale du support pour régler l'espacement longitudinal des éléments s'étendant transversalement (9), faire passer le support dans une extrudeuse (non représentée), extruder un matériau élastomère (7) sur au moins une partie du support (5), et, dans une étape séparée , dégrader au moins une partie (15,17,19 ou 21) desdits moyens (11) dans au moins une position sélectionnée dans le support (5), laquelle position peut être située en n'importe quel emplacement longitudinal désiré ou en n'importe quel emplacement transversal désiré dans le support, de sorte que dans cette position, lesdits moyens (11) ne reglent plus ledit espacement longitudinal des éléments transversaux (9).

2. Procédé selon la revendication 1, selon lequel l'étape de dégradation intervient après l'extrusion du matériau élastomère (7) sur le support (5).

3. Procédé selon la revendication 1, selon lequel l'étape de dégradation intervient après le durcissement du matériau élastomère (7).

4. Procédé selon la revendication 1, 2 ou 3, selon lequel le support possède une longueur de fil disposé selon une configuration en zig-zag et possédant une pluralité d'éléments transversaux espacés généralement parallèles (9) réunis à des extrémités opposées qui sont des régions marginales du support, par des éléments de fil généralement en forme de U (13), et lesdits moyens (11) s'étendent dans la direction longitudinale du support entre les régions marginales, et les moyens (11) comportent une pluralité de torons d'un fil, d'un fil fini, d'un câble, d'une bande, d'une fibre ou analogue, qui est tricoté, noué, piqué, tissé, soudé ou fixé d'une autre manière aux éléments transversaux espacés longitudinalement (9).

5. Procédé selon la revendication 1, 2 ou 3, selon lequel le support est formé d'un métal ou d'une matière plastique fendue ou estampée (non représentée) et lesdits moyens comprennent au moins un toron d'un fil, d'un fil fini, d'un câble, d'une bande, d'une fibre ou analogue possédant une largeur quelconque nécessaire et s'étendant le long du support.

6. Procédé selon l'une quelconque des revendications 1-5, selon lequel la dégradation est réalisée au moyen d'ultrasons.

7. Procédé selon la revendication 6, selon lequel on applique un cornet au niveau d'une ou de plusieurs parties sélectionnées de la bande, et on le fait vibrer à une fréquence de 20 000 cycles/seconde (20 kHz).

8. Procédé selon la revendication 7, selon lequel la base du cornet possède une surface égale à la surface de la bande devant être dégradée, et une épaisseur égale à la moitié de la longueur d'onde des vibrations, et selon lequel le cornet est appliqué sur la surface de la zone devant être dégradée sous une pression d'environ 275,79 kPa (40 livres/pouce carré), une enclume étant disposée derrière la zone devant être dégradée de manière à retenir de façon stable la bande.

9. Procédé selon l'une quelconque des revendications précédentes, selon lequel le matériau élastomère est du EPDM possédant une dureté Shore 70, et les moyens pour régler l'espacement longitudinal desdits éléments sont réalisés en polyester.

10. Bande extrudée comprenant un support (5) possédant une pluralité d'éléments transversaux espacés (9) équipés de moyens (11) qui s'étendent dans la direction longitudinale du support de manière à régler l'espacement des éléments transversaux (9), un matériau polymère (7) extrudé sur le support (5), et dans laquelle lesdits moyens (11) sont non uniformes sur l'ensemble du support (5), ce qui conduit au fait que la capacité d'étirage et par conséquent la flexibilité du support (5) sont différentes dans des zones choisies du support (5),et dans laquelle lesdits moyens sont formés par un fil, un fil fini, une bande ou analogue, dégradable, qui a été rendu non uniforme par dégradation après extrusion du matériau polymère sur le support, moyennant l'utilisation d'ultrasons, de chaleur, d'agents chimiques ou d'un autre procédé de dégradation.
